# EUROPÄISCHE PATENTSCHRIFT

(11) **EP 1 824 713 B1**
(45) Veröffentlichungstag und Bekanntmachung des Hinweises auf die Patenterteilung: **03.09.2008**
(21) Anmeldenummer: 05825375.8
(22) Anmeldetag: 13.12.2005
(51) Int. Cl.: B60S 1/24

(54) **SCHEIBENWISCHANLAGE FÜR FAHRZEUGE, INSBESONDERE FÜR KRAFTFAHRZEUGE**
WINDSHIELD WIPER SYSTEM FOR VEHICLES, ESPECIALLY MOTOR VEHICLES
SYSTEME D'ESSUIE-GLACE POUR VEHICULES, EN PARTICULIER POUR VEHICULES AUTOMOBILES

(30) Priorität: 18.12.2004 DE 102004061089
(43) Veröffentlichungstag der Anmeldung: 29.08.2007
(73) Patentinhaber: Valeo Wischersysteme GmbH, 74321 Bietigheim-Bissingen (DE)
(72) Erfinder: KRIZEK, Oldrich, 74321 Bietigheim-Bissingen (DE); PURZ, Matthias, 71691 Freiberg am Neckar (DE); STIMPFIG, Christian, 71686 Remseck (DE)
(74) Vertreter: Jahn, Wolf-Diethart
(86) Internationale Anmeldenummer: PCT/EP2005/013373
(87) Internationale Veröffentlichungsnummer: WO 2006/063793

(56) Entgegenhaltungen:
- EP-A- 0 161 168
- DE-B- 1 164 858
- US-A- 5 005 249

## Beschreibung

Die Erfindung bezieht sich auf eine Scheibenwischanlage gemäß Oberbegriff Patentanspruch 1.

Scheibenwischanlagen sind in verschiedensten Ausführungen bekannt und bestehen im einfachsten Fall aus einem ein Wischblatt tragenden Wischarm, der um die Achse einer Wischwelle schwenkbar bzw. pendelnd von einem Elektro- oder Wischermotor über einen Antriebsstrang antreibbar ist. Der Antriebsstrang enthält dabei mehrere Zug- und Schubstangen, die beispielsweise durch eine Kurbel des Wischermotors für einen hin- und hergehenden Hub in Stangenlängsrichtung bewegbar sind und über die dann beispielsweise ein an der jeweiligen Wischwelle vorgesehene Kurbelarm für die Pendelbewegung des mit der Wischwelle verbundenen Wischarmes betätigt wird.

Bekannt sind Scheibenwischanlagen mit zwei von einem gemeinsamen Wischermotor über den Antriebsstrang betätigten Wischarmen und dabei speziell auch solche, bei denen die Wischwellen derart vorgesehen und Wischarme derart betätigt werden, dass sich die von den Wischblättern überstrichenen Wischfelder an einem Wischfeldbereich in der Mitte der Fahrzeugscheibe überdecken und sich das Wischfeld jedes Wischblattes ausgehend von diesem Wischfeldbereich an jeweils einen, einer A-Säule benachbarten Rand der Fahrzeugscheibe erstreckt. Bei diesen gegenläufig arbeitenden Scheibenwischanlagen ist eine spezielle gegenläufige Steuerung der Bewegung der Wischarme in der Weise erforderlich, dass sich die Wischblätter beim Wischvorgang gegenseitig nicht berühren und behindern. Um dies zu erreichen, ist auch bekannt, im Antriebsstrang zwischen dem Wischermotor und einem der beiden Wischarme ein Kreuzlenkergetriebe bzw. ein Umlenklager vorzusehen (DE-PS 11 64 858, DE 36 44 428 A1), welches nicht nur die gegenläufige Bewegung des einen Wischarmes gegenüber dem anderen Wischarm bewirkt, sonder auch eine Änderung der Winkelgeschwindigkeit der Pendel- oder Schwenkbewegung dieses Wischarmes, so dass zwar beide Wischarme zeitgleich die jeweilige Umkehrstellung erreichen, einer der beiden Wischarme aber beim Schwenken aus der Parkstellung dem anderen Wischarm derart nacheilt, dass eine Kollision der Wischblätter nicht eintritt. Speziell bei einer derartigen, gegenläufig arbeitende Scheibenwischanlage besitzen die Wischwellen der beiden Wischarme einen relativ großen Abstand voneinander.

Bekannt ist die Verwendung von Kreuzlenkergetrieben auch bei Gleichlaufwischanlagen, um beispielsweise eine gewünschte Bewegungscharakteristik für die Schwenkbewegung der Wischarme zu erreichen.

Bei stark gekrümmten Windschutzscheiben ist es erforderlich, die Scheibenwischanlage so zu konzipieren, dass sie der Krümmung der Fahrzeugscheibe folgt, wodurch die Achsen der Wischwellen nicht mehr parallel zu einander orientiert sind, sondern einen Winkel miteinander einschließen. Dies bedeutet, dass auch an einander anschließende Elemente des Antriebsstrangs einen Winkelversatz an den sie verbindenden Gelenken aufweisen, wobei für die Gelenke allerdings jeweils nur ein definierter maximaler Winkelversatz zulässig ist und hierdurch Grenzen bezüglich der Realisierung einer solchen Scheibenwischanlage gesetzt sind. Speziell die bisher üblichen in Scheibenwischanlagen verwendeten Kreuzlenkergetriebe haben dabei den Nachteil, dass die antriebsmäßige Verbindung zwischen einem das Kreuzlenkergetriebe antreibenden Funktionselement des Antriebsstranges und dem Kreuzlenkergetriebe so gestaltet werden muss, dass die Achse der Bewegung dieses Funktionselementes in eine Ebene liegt, die von der Schwenkachse des schwenkbaren Gelenkträgers des Kreuzlenkergetriebes senkrecht oder nahezu senkrecht geschnitten wird. Ein Winkelversatz zwischen der Ebene der Bewegung des Funktionselementes und der Schwenkebene des schwenkbar gelagerten Gelenkträgers ist also nicht zulässig.

EP-A-0161 168 offenbart den Oberbegriff des Anspruchs 1.

Aufgabe der Erfindung ist es, eine Scheibenwischanlage aufzuzeigen, die trotz Verwendung wenigstens eines Kreuzlenkergetriebes im Antriebsstrang die Probleme hinsichtlich eines Winkelversatzes nicht aufweist. Zur Lösung dieser Aufgabe ist eine Scheibenwischanlage entsprechend dem Patentanspruch 1 ausgebildet.

Weiterbildungen sind Gegenstand der Unteransprüche.

Die Erfindung wird im Folgenden anhand der Figuren an Ausführungsbeispielen näher erläutert. Es zeigen:
- Fig. 1 in: in vereinfachter Darstellung eine Scheibenwischanlage gemäß der Erfindung;
- Fig. 2: den Antriebsstrang der Anlage der Figur 1 in Blickrichtung des Pfeils A der Figur 1;
- Fig. 3: in vergrößerter Darstellung und in einer Ansicht entsprechend der Figur 2 ein als Kreuzlenkeranordnung oder -getriebe ausgebildetes Umlenklager des Antriebsstrangs;
- Fig. 4 - 6: das Umlenklager der Figur 3 jeweils in perspektivischer Darstellung und in verschiedenen Ansichten;
- Fig.. 7 - 10: in verschiedenen, auch perspektivischen Darstellungen eine weitere mögliche Ausführungsform des als Kreuzlenkergetriebe ausgebildeten Umlenklagers des Antriebsstrangs der Scheibenwischanordnung.

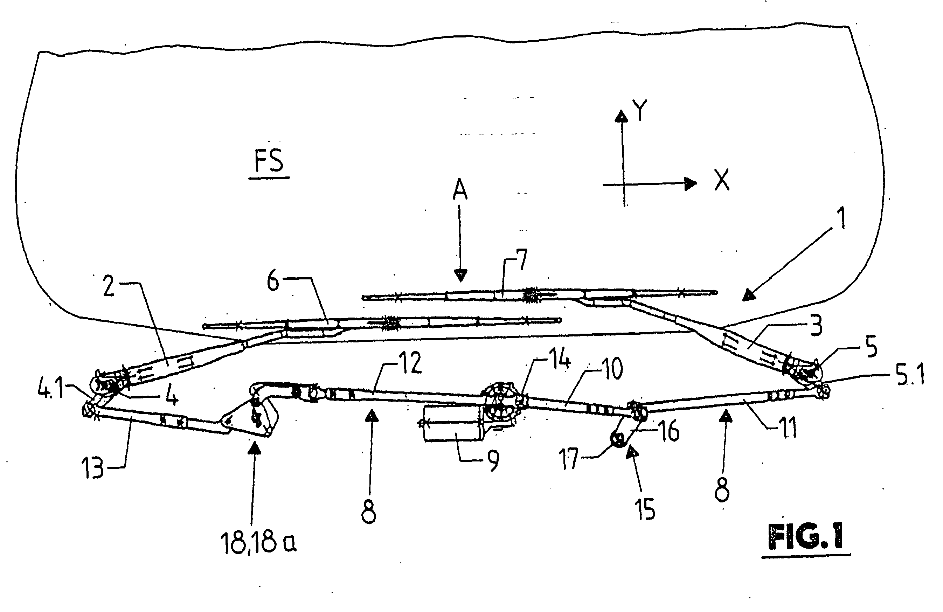

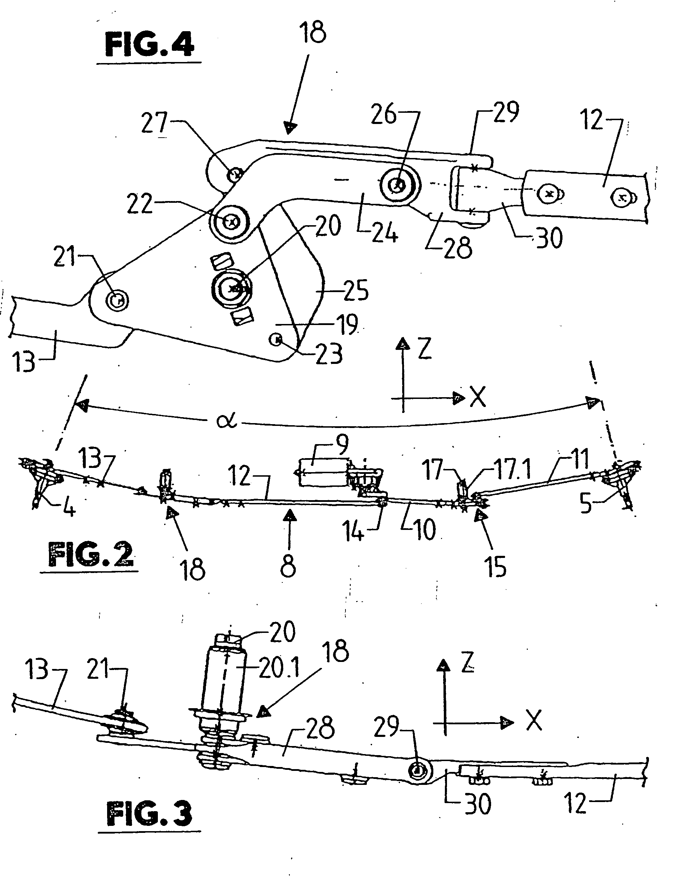

Zur Vereinfachung der Erläuterung sind in den Figuren 1 - 3 die jeweils senkrecht zueinander verlaufenden Raumachsen, d.h. die X-Achse, Y-Achse und Z-Achse angegeben, wobei die X-Achse und Y-Achse in der Zeichenebene der Figur 1 liegen, d.h. diese Zeichenebene als XY-Ebene definieren, und die X-Achse sowie die Z-Achse in der Zeichenebene der Figuren 2 und 3 liegen und diese Zeichenebene als XZ-Ebene definieren.

Die in den Figuren allgemein mit 1 bezeichnete, gegenläufig arbeitende Scheibenwischanlage besteht im Wesentlichen aus zwei Wischarmen 2 und 3, die jeweils mit einem Ende an einer Wischwelle 4 bzw. 5 befestigt sind und an dem anderen Ende das gegen die Fahrzeugscheibe FS anliegende Wischblatt 6 bzw. 7 tragen.

Über einen in den Figuren 1 und 2 allgemein mit 8 bezeichneten Antriebsstrang und über an den Wischwellen 4 und 5 vorgesehene und radial von diesen wegstehende Kurbelarme 4.1 bzw. 5.1 sind die beiden Wischarme 2 und 3 zum Wischen bzw. Reinigen der Fahrzeugscheibe gegensinnig aus der in der Figur 1 dargestellten Parkstellung in eine Umkehrstellung und aus dieser zurück in die Parkstellung schwenkbar, und zwar durch einen Wischermotor 9 (Elektromotor mit Getriebe). Der Wischermotor 9 befindet sich etwa in der Mitte des Antriebsstranges 8 bzw. in der Mitte oder etwa in der Mitte zwischen den beiden Wischwellen 4 und 5.

Durch die Ausbildung der Wischanlage 1 als gegenläufig arbeitende Wischanlage besitzen die beiden Wischwellen 4 und 5, die bei der dargestellten Ausführungsform mit ihren Achsen in einer gemeinsamen horizontalen Ebene (XZ-Ebene) angeordnet sind, in Richtung der X-Achse einen relativ großen Abstand voneinander, d.h. der Abstand zwischen den Wischwellen 4 und 5 ist beispielsweise wesentlich größer als der Abstand, den diese Wischwellen zu dem jeweiligen benachbarten vertikalen Seitenrand der Fahrzeugscheibe FS aufweisen.

Bei der dargestellten Ausführungsform ist angenommen, dass es sich bei der Fahrzeugscheibe FS um eine stark gewölbt Scheibe handelt, d.h. um eine Scheibe, die zumindest um Achsen parallel zur Y-Achse gewölbt ist.

Wegen der Wölbung der Fahrzeugscheibe schließen die Achsen der Wischwellen 4 und 5 bei der dargestellten Ausführungsform einen Winkel α miteinander ein, der sich zur Fahrzeugvorderseite hin öffnet.

Im Einzelnen besteht der Antriebsstrang 8 aus mehreren, ein Antriebsgestänge bildenden Schub- und Zugstangen 10 - 13, die teilweise u.a. zur Einstellung der Parkstellung der Wischarme 2 und 3 längenverstellbar ausgebildet sind. Die Zug- und Schubstange 10 ist mit einem Ende an einer um die Z-Achse umlaufend angetriebenen Kurbel 14 der Ausgangswelle des Wischermotors 9 angelenkt und mit dem anderen Ende über ein Umlenklager 15 gelenkig mit dem einen Ende der Zug- und Schubstange 11 verbunden, die mit ihrem anderen Ende an dem Kurbelarm 5.1 des Wischarmes 3 angelenkt ist. Das Umlenklager 15 ist von zwei Hebeln 16 gebildet, die bei der Darstellung der Figur 1 hintereinander angeordnet sind und die an einem Ende an einer gemeinsamen Welle 17 befestigt sind, so dass beim Schwenken eines Hebels 16 der andere über die in einem fahrzeugseitigen Lager 17.1 gelagerte Welle 17 mitgeschwenkt wird. An den freien Enden der beiden Hebel 16 sind die Zug- und Schubstangen 10 bzw. 11 angelenkt, und zwar derart, dass die Längserstreckung dieser Stangen in der Ansicht der Figur 2 bzw. in der Projektion auf die XZ-Ebene etwa den spitzen Winkel ½α miteinander einschließen.

An der Kurbel 14 ist weiterhin die Zug- und Schubstange 12 mit einem Ende angelenkt. Das andere Ende dieser Stange ist über ein Umlenklager 18 gelenkig mit dem einen Ende der Zug- und Schubstange 13 verbunden, die mit ihrem anderen Ende an dem Kurbelarm 4.1 des Wischarmes 2 angelenkt ist. Die Längserstreckungen der Zug- und Schubstangen 12 und 13 schließen wiederum in ihrer Projektion auf die XZ-Ebene den spitzen Winkel von etwa ½α ein.

Sämtliche Gelenkachsen des Antriebsstrangs 8 liegen bei der dargestellten Ausführungsform jeweils in der XZ-Ebene und sind in Richtung der Z-Achse orientiert bzw. schließen mit dieser Achse einen Winkel von ½α oder kleiner ein.

Zur Erzeugung der gegenläufigen Bewegung der Wischarme 2 und 3 und um die Bewegungen dieser Wischarme bzw. der dortigen Wischblätter 6 und 7 derart aufeinander abzustimmen,
a) dass das Wischblatt 6 beim Bewegen der Wischarme 2 und 3 aus der Parkstellung in die Umkehrstellung zunächst dem Wischblatt 7 nacheilt und dann, wenn sich das Wischblatt 7 aus dem Bewegungsraum des Wischblattes 6 herausbewegt hat, beschleunigt in die Umkehrstellung geschwenkt wird, so dass beide Wischblätter 6 und 7 zeitgleich oder im Wesentlichen zeitgleich diese Umkehrstellung erreichen, und
b) dass bei der Bewegung aus der Umkehrstellung in die Parkstellung das Wischblatt 6 dem Wischblatt 7 vorauseilt, so dass sich die Wischblätter 6 und 7 bei dem Wischvorgang nicht berühren,
ist das Umlenklager 18 als Kreuzlenkergetriebe ausgebildet.

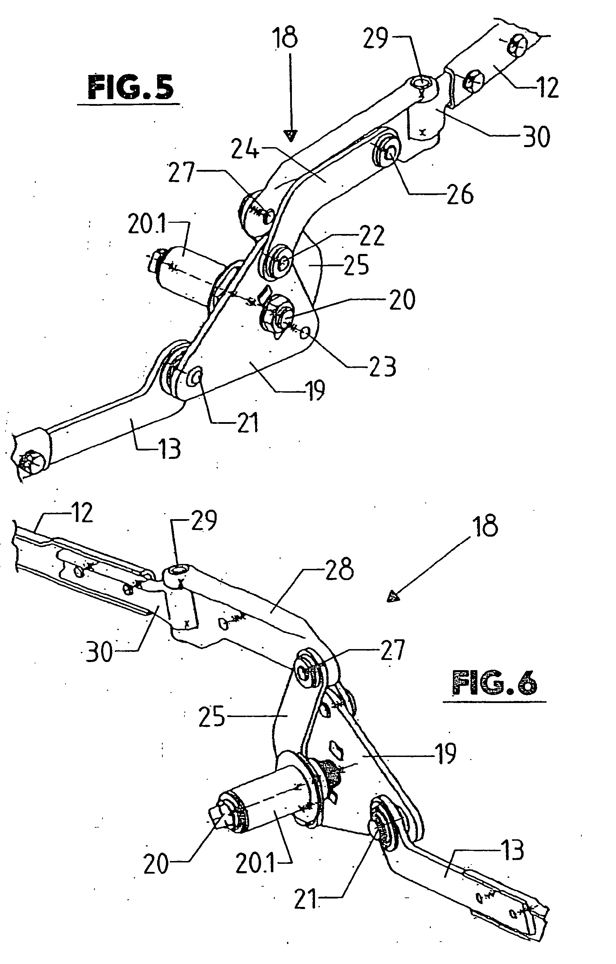

Es besteht bei der in den Figuren 3 - 6 dargestellten Ausführungsform aus einem als dreieckförmige Platte ausgebildeten Gelenkträger 19, der mit einer Welle 20 an einem fahrzeugseitigen Lager 20.1 schwenkbar vorgesehen ist. Die Achse der Welle 20 liegt ebenfalls in einer XZ-Ebene und schließt mit der Z-Achse den Winkel kleiner als ½α ein.

Im Bereich eines Eckpunktes ist der Gelenkträger 19 über ein Gelenk 21 mit dem umlenklagerseitigen Ende der Zug- und Schubstange 13 verbunden. Das Gelenk 21 ist hierbei so ausgebildet, dass im Bereich des Gelenks 21 ein gewisses Schwenken der Zug- und Schubstange 13 auch um Achsen radial zur Achse des Gelenks 21, also ein gewisser Winkelversatz möglich ist. Im Bereich der beiden anderen Ecken des Gelenkträgers 19 ist an diesem mit Gelenken 22 und 23 jeweils ein Kreuzgelenkhebel 24 bzw. 25 (Kreuzlenker) angelenkt. Diese sind jeweils an ihrem anderen Ende mit Gelenken 26 (für Kreuzgelenkhebel 24) bzw. 27 (für Kreuzgelenkhebel 25) an einem Gelenkträger 28 angelenkt, wobei die beiden Gelenke 26 und 27 in Richtung einer Längsachse L des Gelenkträgers 28 gegeneinander versetzt sind und an den einander entfernt liegenden Enden des bei dieser Ausführungsform langgestreckten bzw. stegartigen Gelenkträgers 28 befinden.

Die Achsen der Gelenke 21, 22, 23, 26 und 27 sind parallel zueinander und auch parallel zur Achse der Welle 20. Weiterhin sind die Gelenke 22, 23, 26 und 27 so angeordnet, dass sich die Kreuzgelenkhebel 24 und 25, die in in Richtung der Achsen der Gelenke gegeneinander versetzten unterschiedlichen Ebenen angeordnet sind, in der Parkstellung der Wischarme 2 und 3 kreuzen.

Der Gelenkträger 28 ist über ein zusätzliches Gelenk 29 gelenkig mit dem umlenklagerseitigen Ende der Zug- und Schubstange 12 verbunden. Das Gelenk 29 ist so ausgebildet, dass es nur einen einzigen Freiheitsgrad aufweist, nämlich für eine Dreh- oder Schwenkbewegung um eine Achse senkrecht zur Längserstreckung der Zug- und Schubstange sowie senkrecht zur Achse der Gelenke 22, 23, 26 und 27. Durch dieses zusätzliche Gelenk 29, welches über einen Gelenkträger 30 mit der Zug- und Schubstange 12 in Längsrichtung dieser Stange einstellbar verbunden ist, ist es möglich, die Zug- und Schubstange 12 schräg zum Umlenklager 18 bzw. zur Schwenkebene des Gelenkträgers 19 zu orientieren, d.h. derart zu orientieren, dass die Zug- und Schubstange 12 mit ihrer Längserstreckung zwar in der XY-Ebene liegt, die Schwenkachse des Gelenkträgers 19 und damit auch die Gelenkachsen 21, 22 und 23 sowie 26 und 27 senkrecht zu einer Ebene orientiert sind, die mit der XY-Ebene einen Winkel einschließt bzw. einen Winkelversatz aufweist.

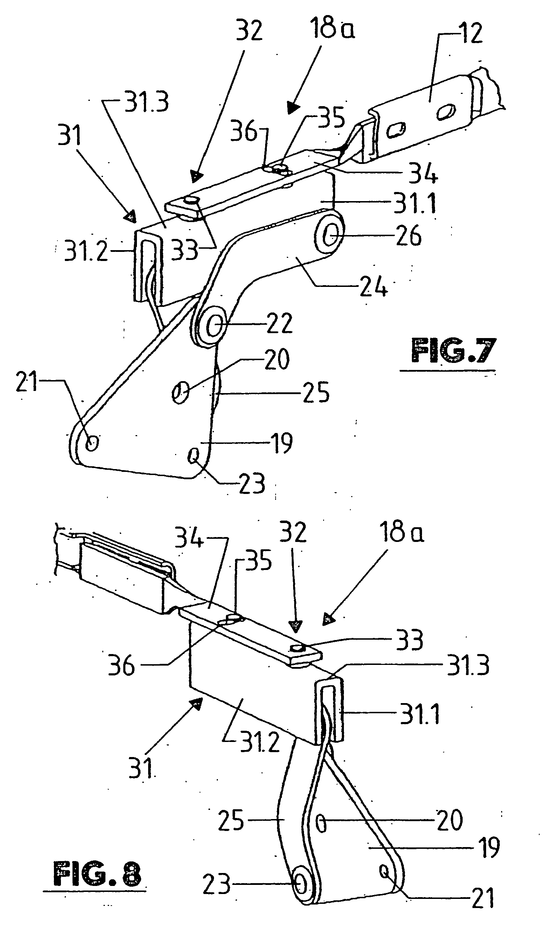

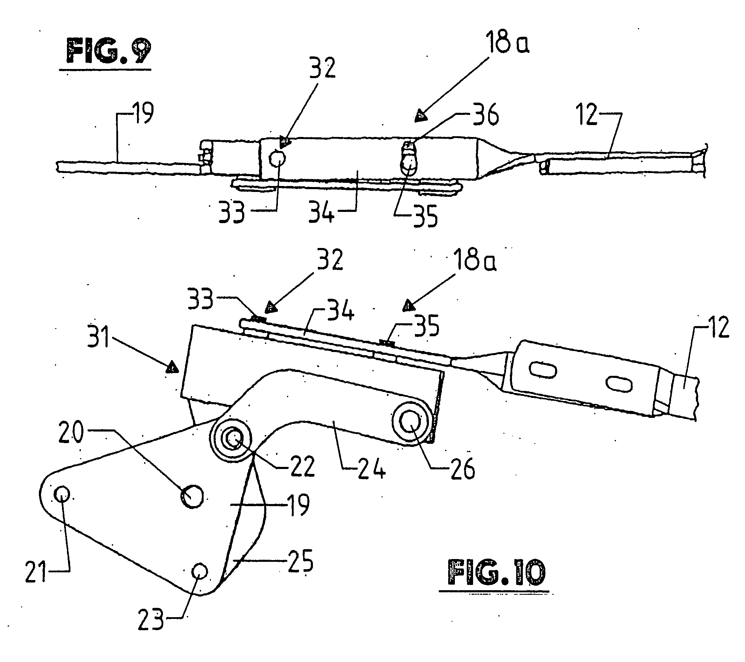

Die Figuren 7 - 10 zeigen als weitere mögliche Ausführungsform ein Umlenklager 18a, welches anstelle des Umlenklagers 18 verwendet werden kann und sich von dem Umlenklager 18 im Wesentlichen nur dadurch unterscheidet, dass anstelle des Gelenkträgers 28 ein von einem U-Profil gebildeter Gelenkträger 31 vorgesehen ist, an dessen Schenkeln 31.1 und 31.2 die beiden Kreuzgelenkhebel 24 und 25 angelenkt sind, und zwar der Kreuzgelenkhebel mit dem Gelenk 26 am Schenkel 31.1 außen und der Kreuzgelenkhebel 25 mit dem Gelenk 27 am Schenkel 31.2 innen liegend. Der die beiden Schenkel 31.1 und 31.2 verbindende Jochabschnitt 31.3 ist über einen das zusätzliche Gelenk 32 bildenden Gelenkbolzen 33 mit einem weiteren Gelenkträger 34 verbunden, der bei der dargestellten Ausführungsform von einer Länge eines Band-Materials aus Stahl gebildet ist und das umlenklagerseitige Ende der Zug- und Schubstange 12 bildet. Der Gelenkträger 34 ist ebenso wie der zusätzliche Gelenkträger 31 in Achsrichtung der Zug- und Schubstange 12 einstellbar. Das Gelenk 32 ist wiederum so ausgebildet, dass es nur einen einzigen Freiheitsgrad aufweist, d.h. ein Schwenken des Gelenkträgers 31 allein um die senkrecht zu den Gelenken 22, 23, 26, 27 orientierte Achse des Gelenkbolzens 33 ermöglicht. Weiterhin sind bei dieser Ausführungsform Mittel vorgesehen, die die Schwenkbewegung um die Achse des Gelenkbolzens 33 auf einen vorgegebenen Winkelbereich zu begrenzen. Hierfür ist am Jochabschnitt 31.3 ein Zapfen 35 vorgesehen, der in ein Langloch 36 eingreift, welches mit seiner Längserstreckung senkrecht zur Längsachse des Gelenkträgers 34 orientiert ist, so dass die Schwenkbewegung des Gelenkträgers 31 relativ zum Gelenkträgers 34 durch Anschlagen des Zapfens 35 gegen die beiden Enden des Langloches 36 auf einen vorgegebenen Winkelbereich begrenzt wird.

Der Gelenkbolzen 33 befindet sich dabei an dem der Zug- und Schubstange 12 entfernt liegenden Ende des Gelenkträgers 34. Der Zapfen 35 und das Langloch 36 sind gegenüber dem Gelenkbolzen 33 zur Zug- und Schubstange 12 hin versetzt.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrundeliegende Erfindungsgedanke verlassen wird. Die Ausbildung der Kreuzlenkergetriebe 18 bzw. 18a mit dem zusätzlichen Gelenk 29 bzw. 32 eignet sich nicht nur als Umlenklager und dabei speziell auch nicht nur als Umlenklager für gegenläufig arbeitende Wischanlagen, sondern generell zum Antrieb von Wischarmen in Wischanlagen, bei denen es aus kinematischen und/oder konstruktiven Gründen, beispielsweise wegen wischanlagenspezifischer Erfordernisse, wegen der Windschutzscheibengeometrie usw. notwendig ist, dass diejenige Ebene, in der eine mit einer Kreuzlenkeranordnung zusammenwirkende Zug- und/oder Schubstange bewegt wird bzw. die von der Dreh- oder Schwenkachse der Kurbel des Wischermotors senkrecht geschnitten wird, mit derjenigen Ebene einen Winkel einschließt, zu der die Schwenkachse der Kreuzlenkergetriebe senkrecht orientiert ist.

Weiterhin ist es beispielsweise auch möglich, dass der Gelenkträger 19 direkt an einer Wischwelle vorgesehen ist, um so z.B. den Bewegungsablauf der Wischwelle in einer bestimmten Weise zu steuern, beispielsweise auch - aber nicht ausschließlich - bei gegenläufig arbeitenden Wischanlagen.

### Bezugszeichenliste

- 1: Wischanordnung
- 2, 3: Wischarm
- 4,5: Wischwelle
- 6, 7: Wischblatt
- 8: Antriebsstrang oder Antriebskinematik
- 9: Wischermotorsmotor
- 10, 11, 12, 13: Zug- und Schubstange
- 14: Kurbel
- 15: Umlenklager
- 16: Hebel
- 17: Welle
- 17.1: Lager
- 18: Umlenklager
- 19: Gelenkträger
- 20: Welle
- 20.1: Lager
- 21, 22, 23: Gelenk
- 24, 25: Kreuzgelenkhebel
- 26, 27: Gelenk
- 28: Gelenkträger
- 29: Gelenk
- 30,31: Gelenkträger
- 31.1,31.2: Schenkel
- 31.3: Jochabschnitt
- 32: Gelenk
- 33, 34: Gelenkträger
- 35: Zapfen
- 36: Langloch
- A: Blickrichtung
- FS: Fahrzeugscheibe
- X, Y, Z: Raumachse

## Patentansprüche

1. Scheibenwischanlage für Fahrzeuge, insbesondere für Kraftfahrzeuge, mit wenigstens einem Wischarm (2, 3), der über einen Antriebsstrang (8) von einem Wischermotor (9) für eine pendelnde Bewegung antreibbar ist, wobei im Antriebsstrang (8) wenigstens ein Kreuzlenkergetriebe (18, 18a) vorgesehen ist, welches zwei Gelenkträger (19, 28, 31) sowie wenigstens zwei mit den Gelenkträgern (19, 28, 31) über Gelenke (22, 23, 26, 27) verbundene Kreuzlenker (24, 25) aufweist, von denen ein erster Gelenkträger (19) um eine Achse (20) parallel zu den Achsen der Gelenke (22, 23, 26, 27) an einem fahrzeugseitigen Lager (20.1) schwenkbar vorgesehen ist,
**dadurch gekennzeichnet,**
**dass** einer der Gelenkträger (19, 28, 31) über ein weiteres Gelenk (29, 32) mit einem das Kreuzlenkergetriebe (18, 18a) antreibenden oder von diesem angetriebenen Funktionselement (12) des Antriebsstrangs (8) verbunden ist, und dass das weitere Gelenk (29, 32) lediglich einen einzigen Freiheitsgrad für ein Schwenken um eine Achse senkrecht zur Schwenkachse des ersten Gelenkträgers (19) aufweist.

2. Scheibenwischanlage nach Anspruch 1, **dadurch gekennzeichnet, dass** das weitere Gelenk (29, 32) an dem über die Kreuzlenker (24, 25) mit dem ersten Gelenkträger (19) verbundenen zweiten Gelenkträger (28, 31) vorgesehen ist.

3. Scheibenwischanlage nach Anspruch 1 oder 2, **dadurch gekennzeichnet, dass** das Funktionselement des Antriebsstrangs (8) eine Zug- und Schubstange (12) ist, die durch den Wischermotor (9) in Richtung ihrer Längserstreckung für eine hin- und hergehende Hubbewegung antreibbar ist.

4. Scheibenwischanlage nach einem der vorhergehenden Ansprüche, **dadurch gekennzeichnet, dass** die Ebene, in der die hin- und hergehende Bewegung des Funktionselementes (12) erfolgt, mit der Ebene der Schwenkbewegung des ersten Gelenkträgers (19) einen Winkel einschließt.

5. Scheibenwischanlage nach einem der vorhergehenden Ansprüche, **dadurch gekennzeichnet, dass** über den ersten Gelenkträger (19) die Wischwelle (4) des wenigstens einen Wischarmes (2) angetrieben wird.

6. Scheibenwischanlage nach einem der vorhergehenden Ansprüche, **dadurch gekennzeichnet, dass** die Wischwelle (4) des wenigstens einen Wischarmes (2) über eine Zug- oder Schubstange und einen an der Wischwelle (4) vorgesehenen Kurbelhebel (4.1) antriebsmäßig mit dem Kreuzlenkergetriebe (18, 18a) bzw. mit dem dortigen ersten Gelenkträger (19) verbunden ist.

7. Scheibenwischanlage nach einem der vorhergehenden Ansprüche, **dadurch gekennzeichnet, dass** die Schwenkachse des ersten Gelenkträgers (19) des Kreuzlenkergetriebes (18, 18a) von der Achse einer Wischwelle gebildet ist, auf der der wenigstens eine Wischarm (2) befestigt ist.

8. Scheibenwischanlage nach einem der vorhergehenden Ansprüche, **dadurch gekennzeichnet, dass** bei Ausbildung der Scheibenwischanlage mit wenigstens zwei gegenläufig arbeitenden Wischarmen (2, 3) das Kreuzlenkergetriebe (18, 18a) als Umlenklager im Antriebsstrang (8) zwischen dem Wischermotor (9) und einem der Wischarme (2) vorgesehen ist.

9. Scheibenwischanlage nach einem der vorhergehenden Ansprüche, **dadurch gekennzeichnet, dass** bei wenigstens zwei, jeweils einen Wischarm (2, 3) tragenden Wischwellen (4, 5) die Achsen dieser Wischwellen einen Winkel (α) einschließen.

## Claims

1. Windscreen wiper module for vehicles, particularly motor vehicles, with at least one wiper arm (2, 3) capable of being driven by a drive train (8) of a wiper motor (9) for an oscillating movement, with at least one transverse control gear (18, 18a) being provided in the drive train, which has two articulation supports (19, 28, 31) in addition to two transverse control arms (24, 25) connected to the articulation supports (19, 28, 31) by means of articulations (22, 23, 26, 27), of which a first articulation support (19) is swivel-mounted on a bearing (20.1) on the vehicle side around an axis (20) parallel to the axes of the articulations (22, 23, 26, 27), **characterised in that**, one of the articulation supports (19, 28, 31) is connected by means of a further articulation (29, 32) to a functional element (12) driving the transverse control gear or driven by the latter of the drive train (8) and the further articulation (29, 32) has solely a single degree of freedom for pivoting around an axis vertically to the pivoting axis of the first articulation support (19).

2. Windscreen wiper module according to claim 1, **characterised in that** the further articulation (29, 32) is provided on the second articulation support (28, 31) connected to the first articulation support by means of the transverse control arm (24, 25).

3. Windscreen wiper module according to claim 1 or 2, **characterised in that** the functional element of the drive train (8) is a pull and push rod (12) which is capable of being driven by the wiper motor (9) in the direction of its longitudinal axis for a to-and-fro stroke movement.

4. Windscreen wiper module according to one of the above claims, **characterised in that** the plan in which the to-and-fro movement of the functional element (12) occurs forms an angle with the plane of the pivoting movement of the first articulation support (19).

5. Windscreen wiper module according to one of the above claims, **characterised in that** the wiper shaft (4) of the at least one wiper arm (2) is driven by means of the first articulation support.

6. Windscreen wiper module according to one of the above claims, **characterised in that** the wiper shaft (4) of the at least one wiper arm (2) is connected in the manner of a drive to the transverse control gear (18, 18a) and with the first articulation support (19) at this position by means of a pull or push rod and a crank lever provided on the wiper shaft (4).

7. Windscreen wiper module according to one of the above claims, **characterised in that** the pivoting axis of the first articulation support (19) of the transverse control gear (18, 18a) is formed by the axis of a wiper shaft to which the at least one wiper arm (2) is fixed.

8. Windscreen wiper module according to one of the above claims, **characterised in that** in designing the windscreen wiper module with at least two wiper arms (2, 3) working in opposite direction, the transverse control gear (18, 18a) is provided as a deflection bearing in the drive train (8) between the wiper motor (9) and one of the wiper arms (2).

9. Windscreen wiper module according to one of the above claims, **characterised in that** with at least two wiper shafts (4, 5) bearing a wiper arm (2, 3) respectively, the axes of these wiper shafts form an angle (α).

## Revendications

1. Système d'essuie-glace destiné à des véhicules, en particulier à des véhicules automobiles, comportant au moins un bras d'essuie-glace (2, 3) qui peut être entraîné en un mouvement de pivotement par un moteur d'essuie-glace (9) par l'intermédiaire d'un ensemble cinématique (8), dans l'ensemble cinématique (8) étant prévu au moins un mécanisme d'articulation de type cardan (18, 18a) qui présente deux supports d'articulation (19, 38, 31) ainsi qu'au moins deux bielles de liaison (24, 25) reliées aux supports d'articulation (18, 21, 31) par l'intermédiaire d'articulations (22, 23, 26, 27), dont un premier support d'articulation (19) est prévu pour pouvoir pivoter autour d'un axe (20) parallèle aux axes des articulations (22, 23, 26, 27) sur un palier (20.1) côté véhicule, **caractérisé en ce qu'**un des supports d'articulation (19, 28, 31) est relié par une autre articulation (29, 32) à un élément fonctionnel (12) de l'ensemble cinématique (8) entraînant le mécanisme d'articulation de type cardan (18, 18a) ou étant entraîné par lui, et **en ce que** l'autre articulation (29, 32) ne présente qu'un seul degré de liberté pour un pivotement autour d'un axe perpendiculaire à l'axe de pivotement du premier support d'articulation (19).

2. Système d'essuie-glace selon la revendication 1, **caractérisé en ce que** l'autre articulation (29, 32) est prévue sur le deuxième support d'articulation (28, 31) relié au premier support d'articulation (19) par l'intermédiaire des bielles de liaison (24, 25).

3. Système d'essuie-glace selon la revendications 1 ou 2, **caractérisé en ce que** l'élément fonctionnel de l'ensemble cinématique (8) est une tige de traction et de poussée (12) qui peut être entraîné par le moteur d'essuie-glace (9) dans la direction de son étendu longitudinale pour effectuer un mouvement de va-et-vient.

4. Système d'essuie-glace selon une des revendications précédentes, **caractérisé en ce que** le plan dans lequel s'effectue le mouvement de va-et-vient de l'élément fonctionnel (12) forme un angle avec le plan du mouvement de pivotement du premier support d'articulation (19).

5. Système d'essuie-glace selon une des revendications précédentes, **caractérisé en ce que** l'arbre d'essuie-glace (4) du au moins un bras d'essuie-glace (2) est entraîné par l'intermédiaire du premier support d'articulation (19).

6. Système d'essuie-glace selon une des revendications précédentes, **caractérisé en ce que** l'arbre d'essuie-glace (4) du au moins un bras d'essuie-glace (2) est relié pour un entraînement correct au mécanisme d'articulation de type cardan (18, 18a) et/ou au premier support d'articulation (19) qu'il porte, par l'intermédiaire d'une tige de traction ou de poussée et un levier de manivelle (4.1) prévu sur l'arbre d'essuie-glace (4).

7. Système d'essuie-glace selon une des revendications précédentes, **caractérisé en ce que** l'axe de pivotement du premier support d'articulation (19) du mécanisme d'articulation de type cardan (18, 18a) est formé par l'axe d'un arbre sur lequel est fixé le au moins un bras d'essuie-glace (2).

8. Système d'essuie-glace selon une des revendications précédentes, **caractérisé en ce que** dans le cas d'une configuration du système d'essuie-glace avec deux bras d'essuie-glace antagonistes (2, 3), le mécanisme d'articulation de type cardan (18, 18a) est prévu sous la forme d'un palier de renvoi dans l'ensemble cinématique (8) entre le moteur d'essuie-glace (9) et un des bras d'essuie-glace (2).

9. Système d'essuie-glace selon une des revendications précédentes, **caractérisé en ce que** dans le cas de deux arbres d'essuie-glace (4, 5) portant chacun un bras d'essuie-glace (2, 3), les axes de ces arbres d'essuie-glace forment un angle (α).
